**Europäisches Patentamt**

**European Patent Office**

**Office européen des brevets**

(19)

(11) Numéro de publication : **0 493 159 A1**

## (12) DEMANDE DE BREVET EUROPEEN

(21) Numéro de dépôt : **91403286.7**

(51) Int. Cl.⁵ : **A01G 31/00, C03B 37/04**

(22) Date de dépôt : **05.12.91**

(30) Priorité : **18.12.90 FR 9015809**

(43) Date de publication de la demande :
**01.07.92 Bulletin 92/27**

(84) Etats contractants désignés :
**AT BE CH DE DK ES FR GB IT LI LU NL SE**

(71) Demandeur : **ISOVER SAINT-GOBAIN**
**18, avenue d'Alsace**
**F-92400 Courbevoie (FR)**

(72) Inventeur : **Robert, Marie-Agnès**
**2bis, rue du Paradis**
**F-66200 Alenya (FR)**
Inventeur : **Mosnier, Francis**
**14, chemin du Crochet**
**F-60580 Coye La Foret (FR)**
Inventeur : **Guyot, Daniel**
**28, avenue Jean-Jaurès**
**F-60290 Rantigny (FR)**

(74) Mandataire : **Le Vaguerèse, Sylvain Jacques**
**et al**
**SAINT-GOBAIN RECHERCHE 39, quai Lucien**
**Lefranc**
**F-93300 Aubervilliers Cédex (FR)**

(54) **Substrat pour culture hors-sol en laine minérale.**

(57)     L'invention concerne un substrat pour la culture hors-sol constitué de laine minérale.
    Le substrat selon l'invention est constitué d'un feutre de fibres minérales dans lequel le pourcentage des fibres dont le diamètre est hors de l'intervalle défini comme étant celui dont les limites sont à plus et moins 50 % de la valeur moyenne est au moins égal à 30 %.

EP 0 493 159 A1

L'invention concerne un substrat pour la culture hors-sol constitué de laine minérale.

L'utilisation de feutres de laine minérale pour la culture hors-sol a fait l'objet de nombreuses publications. Qu'il s'agisse de laine de verre ou de laine de roche, ces substrats présentent l'avantage d'être très poreux et d'offrir aux racines et aux solutions nutritives un volume très important, les fibres n'occupant généralement pas plus de 5 à 6 % du volume du matériau. Ces matériaux sont, de surcroît, inertes (non phytotoxiques) et d'un coût raisonnable compte tenu de l'utilisation qui en est faite.

Les qualités principales de ces produits restent leur aptitude à offrir des conditions satisfaisantes pour la meilleure croissance possible des plantes. Parmi ces conditions, figurent l'aptitude à offrir un bon ratio de rétention air/eau et un volume suffisant.

Les premiers matériaux constitués de fibres minérales proposés comme substrats de culture étaient directement dérivés de feutres utilisés antérieurement pour l'isolation. Ces feutres, dans leur structure la plus usuelle, sont constitués de fibres disposées en strates principalement parallèles aux faces du feutre.

Les substrats, constitués à partir de ces matériaux stratifiés traditionnels, ont pour particularité de résister de manière insuffisante à un affaissement lorsqu'ils sont imbibés de solution nutritive. Si aucune précaution particulière n'est prise, la diminution de volume du substrat imbibé est extrêmement importante et peut atteindre 25 % du volume initial ou même davantage pour les feutres les plus légers. Cette diminution du volume est néfaste en ce sens qu'elle ne permet pas de garantir l'espace souhaité pour le développement racinaire, elle l'est encore bien plus en ce qu'elle modifie sensiblement le ratio air/eau offert aux plantes.

La demande de brevet français No. 89 03372 présente une solution au problème exposé ci-dessus. Selon ce brevet, on utilise un substrat qui ne présente plus la structure stratifiée indiquée. Le substrat proposé présente un ensemble de fibres dont les orientations sont, pour une proportion accrue, hors des plans parallèles aux faces du feutre, une telle orientation étant obtenue par exemple par une technique dite de "crêpage" telle que celle qui fait l'objet du brevet EP No. 133 083. Dans ces produits crêpés, les fibres disposées dans des directions non parallèles aux faces du feutre confèrent à celui-ci une meilleure résistance à l'écrasement. A titre indicatif, l'affaissement d'un substrat constitué d'un feutre de ce type, toute autre condition étant identique par ailleurs, notamment la masse volumique du feutre, la qualité des fibres, la teneur en liant du feutre..., l'affaissement sous la solution nutritive ne dépasse pas ordinairement 5 à 6 %.

On constate par conséquent une amélioration très sensible et suffisante en général pour répondre à la pratique dans ce domaine.

Au plan de la production industrielle de ces matériaux, la technique du crêpage n'est pas néanmoins sans inconvénient.

Le principal inconvénient est de rendre la fabrication des feutres en question plus coûteuse. Cette considération est importante dans la mesure où le coût du substrat est un facteur sensible du coût global de la culture.

Le surcroît de coût correspondant au crêpage reste acceptable lorsque l'installation sur laquelle les feutres sont produits comporte les éléments nécessaires à ce traitement. Comme indiqué dans le brevet EP précité, il s'agit pour l'essentiel d'une série de paires de convoyeurs animées de vitesses décroissantes.

En règle générale, la production des feutres utilisés pour former les substrats de culture est conduite en alternance avec d'autres produits notamment avec des produits d'isolation. La raison de cette pratique est liée au caractère "saisonnier" de ce type de produit et au fait que la capacité de production des installations les plus courantes dépasse les capacités des marchés locaux en matière de substrats.

Lorsque, pour les productions autres que celles des substrats, la ligne de production comporte les éléments nécessaires au crêpage, le surcoût de fonctionnement reste modéré. En revanche, compte tenu de l'utilisation à temps partiel de la ligne pour la fabrication de substrats, si les autres produits ne sont pas normalement crêpés, l'investissement peut devenir prohibitif.

Pour ces raisons, il était souhaitable de pouvoir disposer de solutions alternatives à l'usage des feutres crêpés, solutions qui permettent d'obtenir néanmoins des feutres ayant une meilleure résistance à l'affaissement que les produits stratifiés traditionnels dont il a été question plus haut.

Les inventeurs se sont efforcés de trouver un produit qui, en particulier, puisse être réalisé sans modification des installations existantes ne comportant pas de moyen de crêpage.

La solution proposée par les inventeurs ne résulte pas d'une transformation de la structure d'un feutre initialement constitué de fibres disposées en strates. Les inventeurs ont constaté qu'il était possible d'obtenir le résultat recherché en modifiant les conditions de production des fibres entrant dans la constitution des feutres servant de substrats.

Les inventeurs ont montré notamment que le réglage des conditions de production, tel que les fibres produites présentent des caractéristiques dimensionnelles moins homogènes que précédemment, permettait d'atteindre une meilleure résistance à la déformation. Le choix des conditions de fibrage selon l'invention, en particulier, est tel que les fibres produites aient un diamètre qui pour au moins 30 % d'entre elles se situe en dehors de l'intervalle défini comme étant celui qui est limité à plus ou moins 50 % du diamètre moyen. De préférence les fibres produites, pour au moins 50 % d'entre elles, ont un diamètre qui se situe hors de l'intervalle ainsi défini.

Si les substrats préparés selon l'invention peuvent être constitués de matériaux divers, notamment de laine de verre ou de ce que l'on nomme laine de roche, en règle générale le besoin de modification correspondant à l'invention est nettement plus sensible en laine de verre. En effet, les conditions usuelles de fabrication de la laine de verre d'isolation tendent à la production, d'une part, de fibres aussi homogènes que possible en ce qui concerne leur diamètre et, d'autre part, de fibres relativement longues. Ces deux aspects, homogénéité des diamètres et longueur des fibres, sont directement liés à la disposition des fibres sous forme de strates dans le feutre et sont, par suite, responsables de la tendance à la déformation sous la charge hydrique.

Dans le cas des fibres de roche, la question de la structure des feutres ne se pose pas ou ne se pose pas avec la même acuité pour plusieurs raisons.

En premier, les fibres produites par les techniques usuelles pour les laines de roche présentent naturellement une certaine dispersion des diamètres. En outre, ces fibres sont aussi généralement relativement courtes. Pour ces raisons, la structure stratifiée est ordinairement moins marquée que pour les feutres de laine de verre, les fibres ont des orientations un peu plus diversifiées.

En second lieu, les feutres de laine de roche, et c'est là en partie au moins une conséquence de la diversité des fibres et de leur faible longueur, sont généralement produits et utilisés dans des conditions de masse volumique apparente supérieures à celles des feutres de laine de verre, ce qui permet aussi d'améliorer leur résistance à la déformation lorsqu'ils sont imprégnés de solution aqueuse.

Dans la suite de la description, il est fait référence uniquement aux feutres de laine de verre, étant entendu que tout ce qui est dit concernant les particularités des fibres et la structure des feutres sont transposables autant que de besoin au cas des laines de roche.

La production de laine de verre pour l'isolation est faite, pour l'essentiel, suivant les techniques dites de centrifugation couplée ou non à un étirage par courant gazeux. Dans ces techniques le verre, préalablement fondu, est conduit sur la paroi interne d'un centrifugeur creux animé d'un mouvement de rotation à vitesse élevée. Le verre fondu s'échappe du centrifugeur par des orifices de petites dimensions pratiqués dans la paroi du centrifugeur, sous forme de fins filaments continus qui sont projetés dans un courant gazeux qui achève leur étirage.

Dans ce mode de production, les conditions pour former la laine de verre la plus homogène possible consistent, notamment, à maintenir les conditions gouvernant le fibrage pratiquement uniformes. Ceci conduit, notamment, à faire en sorte que la température des filaments éjectés hors du centrifugeur et la traction exercée par les courants gazeux sur ces filaments soient aussi relativement uniformes.

La production des feutres servant à la fabrication des substrats selon l'invention, s'écarte volontairement des conditions qui sont recherchées pour les feutres d'isolation, afin d'obtenir des fibres très "inhomogènes", en particulier des fibres dont l'histogramme des diamètres soit relativement large.

Pour aboutir au résultat recherché, une première mesure consiste par exemple à opérer dans des conditions de température différentes du haut en bas de la paroi périphérique du centrifugeur. De cette façon, le verre franchissant les orifices présente une viscosité, et donc une aptitude à être étiré, variable selon la position de l'orifice sur la paroi du centrifugeur. Un filament issu d'un orifice plus chaud, donc moins visqueux, ayant une plus grande facilité à être étiré, conduit à des fibres de diamètres plus petits.

L'écart de température entre partie haute et partie basse de la paroi du centrifugeur sur laquelle sont répartis les orifices en un nombre variable de rangées compris ordinairement entre 10 et 20, peut atteindre une centaine de degrés. En pratique, pour ne pas risquer de compromettre la longévité du centrifugeur par des surchauffes locales ou risquer de figer le verre dans les orifices, l'écart de température est maintenu de préférence à moins de 60 degrés.

Plusieurs moyens peuvent être mis en oeuvre pour établir ces écarts de température. Il est possible, en premier lieu, de jouer de l'apport qui se fait traditionnellement en certains points du centrifugeur, notamment par induction. De façon traditionnelle, dans la production de laine d'isolation, une couronne d'induction permet par exemple le réchauffement de la partie inférieure du centrifugeur qui est plus exposée aux déperditions de chaleur par contact avec un air environnant moins chaud. La température du centrifugeur peut donc être modulée en modifiant la puissance développée par l'induction, voire en interrompant le fonctionnement de celle-ci.

Bien entendu d'autres moyens, suivant les cas, peuvent être mis en oeuvre pour faire varier la température : brûleurs supplémentaires, écrans contre la circulation d'air au voisinage du centrifugeur... Dans tous les cas, il est bien entendu préférable d'utiliser les moyens qui équipent l'installation lorsque celle-ci sert à la production de laine d'isolation.

Un autre moyen permettant de rendre les fibres moins homogènes consiste à modifier les conditions de fonctionnement de l'étirage par les courants gazeux. En particulier, un accroissement de pression du générateur de courant gazeux entourant la zone d'étirage des filaments ordinairement utilisé, entraîne des inhomogénéités d'étirage dans les fibres, notamment par un accroissement des turbulences. L'accroissement de la pression et, par suite, de la vitesse des gaz a aussi pour conséquence une tendance à raccourcir les fibres. Cet effet, comme nous l'avons indiqué plus haut, favorise aussi une disposition plus "désordonnée" des fibres dans le feutre.

Un moyen également pour obtenir l'effet recherché, moyen qui n'est pas indépendant de ceux indiqués précédemment, consiste, partant des conditions de fibrage "isolation", à accroître le débit de verre par orifice. Ceci sera obtenu, par exemple, en accroissant simultanément la température au niveau des orifices et la pression de la couronne de soufflage engendrant la nappe gazeuse qui enveloppe la zone d'étirage.

Les conditions dans lesquelles se forment les fibres sont aussi dépendantes de certaines caractéristiques relatives au dispositif mis en oeuvre. Dans son principe, l'invention vise, comme indiqué précédemment, à l'obtention de fibres se distinguant de celles constituant les produits d'isolation sans pour autant introduire de modifications substantielles de l'installation. Ceci n'interdit pas toute modification du dispositif. En particulier, il est possible de substituer au centrifugeur destiné à la production de fibres "isolation", un centrifugeur présentant des caractéristiques favorisant la formation des produits selon l'invention. Dans la pratique, l'opération qui consiste à changer le centrifugeur est effectuée systématiquement après un certain temps d'utilisation pour tenir compte de l'usure de cette pièce. Cette opération est, par la suite, parfaitement maîtrisée et n'entraîne, le cas échéant, qu'un arrêt momentané de la production. Ceci est parfaitement compatible avec le mode de fonctionnement usuel de ce type d'installation.

Dans ce sens, il est possible d'obtenir les produits selon l'invention en choisissant un centrifugeur dont la configuration favorise la formation de fibres "inhomogènes". Des centrifugeurs de ce type seront, par exemple, ceux dont les orifices sont choisis de façon à éviter ce que nous avons nommé effet "parapluie" dans le brevet FR 1 382 917. L'effet en question vise à faire en sorte que les filaments, issus des différentes rangées d'orifices situées de haut en bas de la paroi périphérique du centrifugeur, soient projetés dans le courant gazeux d'étirage sans que leur trajectoire les amène à se croiser. En plus la force des gaz d'étirage allant en décroissant du haut en bas du centrifugeur, pour obtenir des fibres "homogènes", toujours dans cet effet "parapluie", il est conseillé de disposer des orifices de diamètres décroissant de haut en bas.

A l'inverse, pour obtenir les produits selon l'invention, on utilisera donc de préférence un centrifugeur qui, par exemple, comprendra des rangées d'orifices ayant le même diamètre sur toute la hauteur de la paroi périphérique.

D'autres configurations sont encore possibles qui auront pour effet, par exemple, de moduler le débit de verre passant par chaque orifice.

A titre d'exemple des améliorations qui peuvent être obtenues selon l'invention, on a comparé deux produits préparés, pour le premier selon le mode traditionnel de formation des feutres " isolation" utilisés comme substrat de culture et un feutre obtenu en mettant en oeuvre les conditions indiquées ci-dessus.

Les essais sont faits avec le même verre.

Dans les deux cas, le débit de verre fondu alimentant le centrifugeur est de 15 tonnes par jour.

Dans le mode traditionnel, le centrifugeur de diamètre 300 mm comporte 9000 orifices répartis en 14 rangées en trois séries dont les dimensions s'échelonnent de haut en bas de 1,1 à 0,9 mm de diamètre. Le brûleur annulaire délivre une pression de 600 mm de colonne d'eau. La pression de la couronne de soufflage est réglée à 1,2 bars.

Dans le mode selon l'invention, l'assiette est de même dimension et comporte 7000 orifices répartis sur 14 rangées, mais leur diamètre est uniforme à 1,1 mm. La pression de la couronne de soufflage est de 1,8 bars. La pression du brûleur est maintenue à 600 mm de colonne d'eau.

Les feutres, dans les deux cas, sont produits à la même épaisseur et à la même masse volumique apparente de 28 kg/m³.

Sur les deux feutres recueillis, on effectue un dénombrement en fonction du diamètre des fibres d'un échantillon.

Le tableau suivant indique, pour l'échantillon traditionnel (T) et pour celui de l'invention (I), en fonction du diamètre des fibres exprimé en microns, le pourcentage des fibres de l'échantillon présentant un diamètre au plus égal. Ce dénombrement est effectué de 0 à 25 microns.

| diamètre | échantillon T | échantillon I |
|---|---|---|
| 1 | 6 | 9,5 |
| 2 | 9,5 | 16,5 |
| 3 | 16,5 | 24,6 |
| 4 | 21,5 | 30 |
| 5 | 30,5 | 36,5 |
| 6 | 44 | 40 |
| 7 | 54,5 | 46,5 |
| 8 | 69 | 54 |
| 9 | 74 | 63,5 |
| 10 | 80 | 69 |
| 11 | 88 | 76 |
| 12 | 92,6 | 82,5 |
| 13 | 96 | 87 |
| 14 | 97,5 | 89 |
| 15 | 99,5 | 94 |
| 16 | " | 95,5 |
| 17 | " | 96,5 |
| 18 | " | 98,5 |
| 19 | " | " |
| 20 | " | 99 |
| 21 | " | " |
| 22 | " | " |
| 23 | " | " |
| 24 | " | " |
| 25 | " | 100 |

Le tableau ci-dessus montre une répartition - un histogramme - beaucoup plus large pour le produit selon l'invention. Ceci peut être exprimé, comme indiqué précédemment, en se reportant à la part des fibres dont le diamètre se situe dans un intervalle déterminé de part et d'autre de la valeur moyenne constatée.

Les valeurs moyennes constatées sont respectivement :
■ pour le feutre traditionnel : 6,7 microns,
■ pour le feutre selon l'invention : 7,5 microns.

L'intervalle ± 50 % par rapport à ces valeurs moyennes conduit aux limites suivantes :
■ pour l'échantillon de comparaison : 3,35 à 10,05 microns,
■ pour l'échantillon selon l'invention : 3,75 à 11,25 microns.

Le pourcentage des fibres extérieures à ces intervalles est respectivement de 28,5 % pour l'échantillon témoin et de 57 % pour le produit selon l'invention.

Les deux feutres préparés dans les mêmes conditions, y compris pour ce qui concerne la nature et le taux de liant fixant les fibres les unes aux autres, sont testés pour leurs qualités en tant que substrats.

Les propriétés hydriques des substrats selon l'invention sont au moins égales à celles des substrats antérieurs. En particulier l'aptitude à la rétention d'eau, qui est dépendante de la surface spécifique offerte par les fibres, est au moins égale à celle des substrats précédemment utilisés.

Même si les fibres à diamètre plus élevé sont en nombre accru, globalement les effets du nombre des fibres à faible diamètre est plus important.

Les substrats selon l'invention, dont la composition est celle décrite précédemment, ont, vis-à-vis des substrats antérieurs de même nature, une meilleure résistance à la déformation sous l'effet de l'eau qui les imprègne.

Ayant montré qu'il existe une relation entre la déformation du substrat chargé de solution et la résistance à la compression, les mesures effectuées en bout de ligne de production sont faites sur la résistance à la compression qui peut être effectuée plus commodément.

Les deux produits, préparés comme il est dit plus haut, sont découpés en carrés de 150 mm de côté pour une épaisseur de 75 mm. Les carrés sont soumis à une compression uniforme sous l'effet d'une masse de 5 kg. Les mesures sont faites sur des séries de 12 échantillons de chaque sorte.

La mesure d'affaissement moyen mesuré sur les produits traditionnels correspond à environ 22 %. La même mesure sur les produits selon l'invention fait apparaître un affaissement moyen qui n'est que de 12 %. L'amélioration qui résulte de cette meilleure résistance est d'autant plus significative que, outre l'effet global constaté, la distribution plus régulière des fibres sur l'ensemble du feutre permet d'éviter les défauts localisés qui peuvent être encore plus marqués que ne le laissent voir les chiffres indiqués précédemment. Dans les substrats selon l'invention, ces défauts localisés sont pratiquement éliminés.

Les résultats précédents montrent l'avantage des substrats selon l'invention. Ces avantages sont d'autant plus importants que les feutres utilisés ont une masse volumique plus faible. En pratique, les mesures proposées sont significativement avantageuses pour les substrats dont la masse volumique ne dépasse pas 50 kg/m³.

**Revendications**

1. Substrat de culture hors-sol constitué d'un feutre de fibres minérales, caractérisé en ce que le pourcentage des fibres dont le diamètre est hors de l'intervalle défini comme étant celui dont les limites sont à plus et moins 50 % de la valeur moyenne est au moins égal à 30 %.

2. Substrat selon la revendication 1 pour lequel le pourcentage des fibres dont le diamètre est hors de l'intervalle plus et moins 50 % du diamètre moyen, est au moins égal à 50 %.

3. Substrat selon la revendication 1 ou la revendication 2 constitué d'un feutre de fibres de verre.

4. Substrat selon l'une des revendications précédentes dont la masse volumique est inférieure à 50 kg/m³.

5. Substrat selon la revendication 3 dont le feutre est produit par une technique de centrifugation et étirage gazeux, caractérisé en ce que pour obtenir un histogramme du diamètre des fibres élargi, les conditions sont fixées de telle sorte que l'étirage varie selon les rangées d'orifices sur la hauteur de la paroi périphérique du centrifugeur.

6. Substrat selon la revendication 5, caractérisé en ce que l'on utilise un centrifugeur dont tous les orifices ont le même diamètre.

7. Substrat selon la revendication 5 dans lequel les conditions de température de la paroi du centrifugeur sont réglées de telle sorte qu'une différence de moins de 60°C soit maintenue entre les parties supérieures et inférieures de cette paroi.

**Office européen des brevets**

# RAPPORT DE RECHERCHE EUROPEENNE

Numero de la demande

EP    91 40 3286

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 156 786 (DICALITE EUROPE-NORD) | 1-4 | A01G31/00 |
| Y | * revendications 2,7,10 * | 5,6 | C03B37/04 |
| | --- | | |
| Y | DE-B-1 239 816 (OWENS CORNING FIBERGLAS CORPORATION) | 5,6 | |
| A | * colonne 3, ligne 61 - colonne 4, ligne 28 * | 7 | |
| | * colonne 5, ligne 21 - ligne 36 * | | |
| | * colonne 6, ligne 60 - ligne 68; figures 3,4 * | | |
| | --- | | |
| A | GB-A-2 144 115 (NITTO BOSEKI CO. LTD. ET AL.) | 7 | |
| | * page 5, ligne 41 - ligne 51 * | | |
| | * abrégé * | | |
| | ----- | | |

|  |
|---|
| **DOMAINES TECHNIQUES RECHERCHES (Int. Cl.5)** |
| A01G C03B |

Le présent rapport a été établi pour toutes les revendications

| Lieu de la recherche | Date d'achèvement de la recherche | Examinateur |
|---|---|---|
| BERLIN | 24 MARS 1992 | MARTIN DEL RIO A. |